(19) **Europäisches Patentamt**

**European Patent Office**

**Office européen des brevets**

(11) Publication number: **0 066 942**
A1

(12) **EUROPEAN PATENT APPLICATION**

(21) Application number: **82301946.8**

(22) Date of filing: **15.04.82**

(51) Int. Cl.³: **G 01 P 1/00, G 01 D 11/02, G 11 B 17/32**

(30) Priority: **21.05.81 US 265930**

(43) Date of publication of application: **15.12.82 Bulletin 82/50**

(84) Designated Contracting States: **DE FR GB**

(71) Applicant: **COMPUTER PERIPHERALS INC., 8100-34th Avenue South, Minneapolis Minnesota 55440 (US)**

(72) Inventor: **Johnston, Ross William, 1717 Pulaski Drive, Norristown Pennsylvania 19401 (US)**

(74) Representative: **Caro, William Egerton et al, J. MILLER & CO. Lincoln House 296-302 High Holborn, London WC1V 7JH (GB)**

(54) **An optical encoder.**

(57) An optical encoder has a flexible disc (18) mounted on a shaft (12) and an air bearing guide (26) mounted adjacent at least a portion of the periphery of said disc.

EP 0 066 942 A1

ACTORUM AG

- 1 -

"AN OPTICAL ENCODER"

This invention relates to optical encoders.

Optical tachometers or optical encoders are used to sense the rotational speed of shafts. Encoders currently employ rigid, shaft-mounted discs. These discs when they have 1000 lines or more are produced on rigid film or glass by photographic means. The discs are precision aligned perpendicular to the axis of a shaft so that symmetry of the optical output can be maintained. The precision mounting requires the disc to be of small size, usually less than 5 cm in diameter for discs with 1,000 lines. If the diameter of the disc is increased, the thickness must also increase to give it the necessary rigidity and there is a corresponding increase in optical diffusion which limits the increase in accuracy expected from the greater number of radial lines (and spacing therebetween) which may be placed on a larger diameter disc.

According to the present invention, there is provided an optical encoder having a flexible disc mounted on a shaft and characterised by an air bearing guide means mounted adjacent at least a portion of the periphery of said disc.

The invention is illustrated, merely by way of example, in the accompanying drawings, in which:-

Figure 1 is a side cross-sectional view of an optical encoder according to the present invention;

Figure 2 is a side cross-sectional view of an air bearing guide of the encoder of Figure 1; and

Figure 3 is a section taken on the line 3-3 of Figure 2.

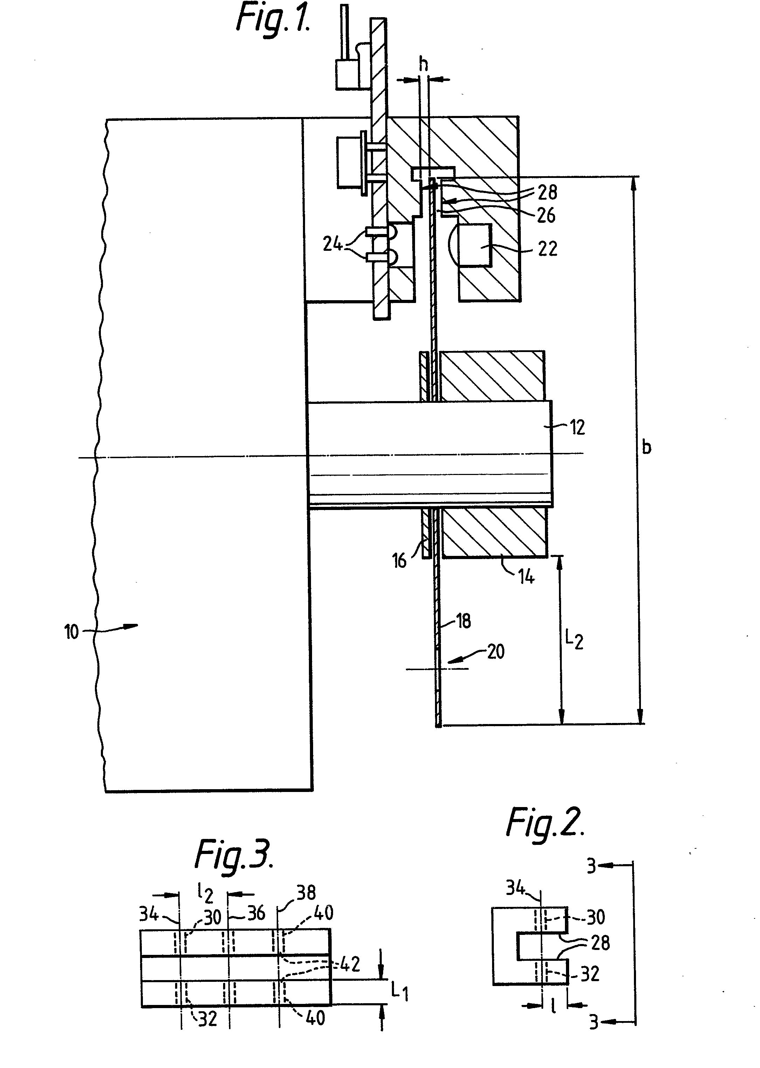

Referring to Figure 1, an optical encoder according to the present invention comprises a motor 10 which drives a shaft 12. Mounted on the shaft 12 perpendicular to the axis thereof and captured between a hub 14 and a collar 16 is a flexible disc 18. The disc has an area 20 of etched lines or slots radially spaced from the shaft 12. The passage of these slots past a light-emitting photo-diode 22 and a phototransistor 24 on rotation of the shaft cooperates to create electric pulses whose frequency is proportional to rotational velocity of the shaft.

Adjacent the periphery of the disc 18 and extending at least along a portion thereof, preferably adjacent to the photo-diode 22 and transistors 24, is an air bearing guide 26. The guide 26 acts to maintain the flexible disc 18 spaced equidistant from opposed planar surfaces 28.

The air bearing guide is shown in greater detail in Figures 2 and 3. The opposed surfaces 28 are parallel and carry opposed orifices 30, 32, aligned with one another on axes 34, 36, 38 perpendicular to the opposed surfaces and parallel to the axis of the shaft 12. Each orifice is preferably identical in cross-section. A pressurised gas, such as air, preferably from a common source (not shown) is fed to exterior ports 40 of each orifice. The gas passes through the orifices to interior ports 42 to create, on the disc 26 rotating therebetween, equal and opposite pressure so as to maintain the disc 26 equidistant between the opposed surfaces 28.

Appropriate air bearing guide criteria may be derived from the following formulae:

$$h = \sqrt[3]{\frac{11 \cdot 3137 \cdot Q \cdot N \cdot \ell}{(P/A) \cdot \ell_2}}$$

where

$h$ = flying height or separation between the surfaces 28 and the disc 18 (cm)

$Q$ = gas flow ($\ell$/sec)

$N$ = viscosity of gas (pond sec/cm$^2$)

$\ell$ = distance from the centre orifice to the outside edge of the respective surface 28 (cm)

$\ell_2$ = distance between the centres of adjacent orifices (cm)

P = load seen by the air bearing guide due to the disc not being flat or the load required to move the disc to the midplane between the surfaces 28 (pond)

A = area of each surface 28 ($cm^2$); and

Q is found from

$$\Delta P_2 = \left(\frac{Q}{A}\right)^2 \left(\frac{4F.L}{D} + 2.28 + C\right) . \frac{Ro}{2}$$

Where

$\Delta P_2$ = pressure drop to supply provided by the air bearing guide to the supply pressure (pond/$cm^2$)

$4F$ = friction factor = $^{64}/Re$

Re = Reynolds number for laminar flow

D = diameter of each orifice (cm)

$L_1$ = length of each orifice (cm)

C = gas discharge loss coefficient = $^1/\sqrt{K}$ = 0.78 where K is the hydraulic resistance of each orifice.

Ro = density of air (gm/$cm^3$)

The load on the bearing, assuming the disc to be a cantilever beam approximation, is

$$P = \frac{y.E.b.h^3}{4.L^3}$$

Where

y = deflection required (cm)

E = modulus of elasticity of the material of the disc (pond/$cm^2$)

b = diameter of the disc (cm)

$L_2$ = cantilever length of the disc from the outside diameter of the hub 14 to the outside edge of the disc (cm) .

The disc may be made of relatively very thin metal, glass or a polyester film manufactured from xylene, such as sold under the Trade Mark MYLAR, and etched, slotted or photolithographed in conventional fashion. However, the disc must not be completely rigid to allow the air bearing guide to move the edge of the disc in its proper position equidistant to the surfaces 28.

In a preferred embodiment, the disc was constructed of stainless steel and slotted, 8.25 cm in diameter and 0.08 mm thick. The air bearing guide was 2.54 cm long having opposed surfaces 0.03 cm apart and 0.95 cm in length. The orifices were in walls 0.18 m thick and spaced equidistant from each other starting approximately 0.64 cm in from a lateral edge in Figure 3 and 0.48 cm from the right hand edge in Figure 2 (as measured to axis of the orifice). The orifices themselves were 0.033 cm in diameter.

0066942

- 5 -

CLAIMS

1.   An optical encoder having a flexible disc (18) mounted on a shaft (12) and characterised by an air bearing guide means (26) mounted adjacent at least a portion of the periphery of said disc.

2.   An encoder as claimed in claim 1 characterised in that said air bearing guide means comprises opposed planar surfaces (28) each having at least one orifice (30, 32) therein to allow communication of a gas under pressure into the region between the opposed surfaces.

3.   An encoder as claimed in claim 2 characterised in that the or said orifices in one surface are aligned with a corresponding orifice in the opposite surface along a perpendicular to both surfaces.

4.   An encoder as claimed in any preceding claim characterised in that said disc is made of metal or a polyester material, such that the stiffness of the disc is less than the stiffness of the air bearing guide means.

0066942

Fig.1.

Fig.2.

Fig.3.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | US-A-3 980 810 (C. TINET) <br> * Column 1, lines 7-17; column 2, line 49 - column 3, line 16; column 4, lines 51-59; column 6, lines 18-22; figures 1,2 * | 1-4 | G 01 P 1/00 <br> G 01 D 11/02 <br> G 11 B 17/32 |
| | --- | | |
| X | IBM TECHNICAL DISCLOSURE BULLETIN, vol. 4, no. 5, October 1961, page 78, New York, USA <br> H.A. KHOURY: "Disc air bearing" * Whole document * | 1-4 | |
| | --- | | |
| A | US-A-3 950 042 (FARMER et al.) <br> * Abstract; figure 5 * | 1-3 | |
| | --- | | |
| A | US-A-3 886 354 (SWIDEN et al.) <br> * Column 3, lines 46-64; figure 2 * | 1 | |
| | ----- | | |

TECHNICAL FIELDS SEARCHED (Int. Cl. ³)

G 01 P
G 01 D
G 11 B
F 16 C

The present search report has been drawn up for all claims

| Place of search | Date of completion of the search | Examiner |
|---|---|---|
| THE HAGUE | 31-08-1982 | HANSEN P. |